# EUROPEAN PATENT SPECIFICATION

(11) **EP 3 886 574 B1**
(45) Date of publication and mention of the grant of the patent: **24.12.2025**
(21) Application number: 19806086.5
(22) Date of filing: 15.11.2019
(51) Int. Cl.: A01K 1/01

(54) **LITTER TOILET FOR DOMESTIC PETS**
EINSTREUTOILETTE FÜR HAUSTIERE
TOILETTE À LITIÈRE POUR ANIMAUX DOMESTIQUES

(30) Priority: 26.11.2018 IT 201800010568
(43) Date of publication of application: 06.10.2021
(73) Proprietor: FERPLAST S.P.A., 36070 Castelgomberto (VI) (IT)
(72) Inventor: VACCARI, Nicola, 36070 Castelgomberto (VI) (IT)
(74) Representative: Sandri, Sandro
(86) International application number: PCT/IB2019/059824
(87) International publication number: WO 2020/109917

(56) References cited:
- US-A- 4 926 794
- US-A- 5 507 248
- US-A- 5 517 947

## Description

### FIELD OF APPLICATION

The present invention relates to a hygienic litter toilet for domestic pets designed to optimise the management of the cleaning steps thereof.

In particular, the hygienic litter toilet according to the invention has the peculiarity of being made through the use of two containers or trays one of which is closed and houses a second open tray having sieving slits or openings located on one side only.

With respect to known solutions the hygienic litter toilet according to the invention has the advantage of facilitating the cleaning steps only using two containers, one of which can always remain resting on the floor without the possibility of dispersion of materials, thus guaranteeing the perfect cleaning also of the area surrounding the litter.

The present invention is advantageously applied in the sector of components and accessories for domestic pets, in particular in the sector of toilets or litters, or hygienic boxes for dogs and cats.

### PRIOR ART

The use of toilets or litters or hygienic boxes in particular for cats, but also for other domestic pets, is known, which are designed for the collection of the excrements of the pet who is used to using them if necessary.

Classic containers for litters of the single tray type are known, the bottom of which is covered with a thickness of a few centimetres of relevant absorbent or aggregating inert granular material which acts as litter, on which the cat goes to deposit the excrements. Such material must be regularly cleaned to remove the excrements using relevant gridded shovels and replaced, once the used part has been removed, with clean inert granular material.

Containers for litters with multiple trays or boxes provided with sifting devices are also known which not only reduce the unpleasantness of the operation but also reduce waste by reducing to a minimum the quantity of litter already used, which is easily removed.

The hygienic toilets provided with sifting systems in most cases make use of various trays with the same dimensions superposed and stacked, some of which are provided with gridded or perforated areas to allow the sifting operations for the purpose of making the litter reusable with the possible addition of inert granular material.

Hygienic toilets with superposed trays envisage the pouring of the inert granular material into the upper tray with the gridded bottom, so that after use by the cat the internal upper tray is lifted so that the grid allows the sieving of the inert granular material that is still clean which falls into the lower tray, whereas the inert granular material comprising the excrements, **i.e.** everything still on the grid, is removed into a disposal container.

At this point the upper gridded tray is unloaded and the sieved inert granular material is deposited into the lower tray, therefore it is necessary to use a third tray into which the gridded tray is placed and onto which the sieved inert granular material present in the other closed tray is poured; then it is sufficient to superpose the two trays with the inert granular material on top of the empty one for restoring the initial conditions.

Therefore, this type of toilet would still require the use of three trays, one of which being gridded on the bottom and two blind for the pouring of the sieved one. Naturally, this can create an increase in the production costs of the third container and a difficulty in arranging it, therefore, for simplification purposes, the third container is made with the same characteristics as the blind lower tray which can be superposed in a stacked way.

This condition implies a further drawback, given the fact that the third tray onto which the sieved inert granular material has been poured can conserve residues of the previous sieving which can adhere to the lower surface of the second lower tray when this is being used, causing the possible adhesion of such residues, which during subsequent sieving would come into direct contact with the floor. The system and procedure for use is however rather complex.

To attempt to solve these problems toilets with multiple trays have been proposed which comprise gridded or perforated parts on only one side of each tray, so that the sieved inert granular material from the upper tray falls onto the lower tray which, after housing the sieved inert granular material is superposed with the unloaded one which in turn becomes the lower one.

In this case two problems have arisen: on one hand inert granular material can be dispersed from the upper tray to the lower tray which would imply adjustment problems between the two components, and another management difficulty due to the fact that the upper tray with every sieving becomes the lower one and vice versa, therefore the resting surfaces on the floor may not remain perfectly clean, also causing the dispersion of dejection materials, with all the negative consequences for the surrounding area.

Document US 5517947 A discloses a sifting litter-box utilizing two identical litter trays, each with sieve openings integrated into one sidewall. The trays are nested so that their respective integrated sieve openings are on diametrically opposed sides of the nested pair of trays, thereby the backwall of the lower tray closes off the sieve openings of the upper tray when nested one atop the other. The litter occupying only the top tray is, after use, sifted into the bottom tray by lifting the top tray and tilting its contents toward its sieve-wall allowing the reusable litter to pass through its sieve openings and form a static pile of sifted reusable litter at the backwall of the bottom tray. Feces and urine clumps are retained in the top tray which in then emptied.

Document US 4926794 A discloses a chamberpot for domestic pets such as cats. The chamberpot allows sand to be removed therefrom with ease, and cleaning work to be done in a simple manner. The chamberpot is constructed to receive a scoop to enable pet keepers to dispose of their pets' excrement without dirtying their hands.

Document US 5507248 A discloses a cat litter sifting device for use with clumping litter includes a pair of nesting pans, the inner one of which has a plurality of holes sized and spaced apart to pass unclumped litter but which trap substantially all clumped litter and fecal matter. The inner pan has uniform bottom and side walls and is closely fitted in the outer pan so that there are substantially no gaps for trapping litter between the pans.

### DESCRIPTION OF THE INVENTION

The present invention aims to provide a hygienic litter toilet for domestic pets designed to optimise the management of the cleaning steps thereof, thus creating a condition which is capable of eliminating or at least reducing the drawbacks highlighted above.

The invention sets out in particular to provide a hygienic litter toilet for domestic pets that simply comprises two trays, only one of which being gridded or provided with sieving slits.

The main aim of the invention is that of making the cleaning steps of the toilet simpler and safer, which toilet is designed so as to prevent dispersions of the inert granular material used and also allowing all the cleaning operations to be performed with maximum simplicity.

This is obtained by means of a hygienic litter toilet for domestic pets designed to optimise the management of the cleaning steps thereof, through implementing the characteristics described in claim **1.**

The dependent claims outline advantageous embodiments of the invention.

Moreover, the invention relates to a method for using the above-mentioned hygienic litter toilet for domestic pets, wherein the second container is separated from the first container and subsequently the inert granular material is sieved and made to fall onto the first container by tilting the second container onto the first container so that the recoverable inert granular material falls onto the bottom of the first container, cleaning the second container from residues present in the second container itself, then pouring the inert granular material from the first container onto the bottom of the second container, and finally arranging the second container in the first container making them match each other.

The main advantages relate to the fact that all the cleaning operations of the solid and liquid residues of the excrements amalgamated into the absorbent and compacting inert granular material are performed with utmost ease sieving from the side grid of the upper tray the inert granular material that falls into the closed lower tray, so as to make it possible to further pour the granular material from the lower tray to the upper one, the bottom of which is flat and closed.

To summarise, the combination of a tray with a flat and closed bottom, with openings made exclusively in one of the side walls, associated with a tray without any openings, and the particular configuration of the trays themselves, offers the advantage that the bottom placed at the top having openings on only one side wall prevents, or at least limits, the leakage of the inert granular material during the movement thereof.

In this way, any possibility of dirtying the floor with inert granular material is prevented.

### ILLUSTRATION OF THE DRAWINGS

Further characteristics and advantages of the invention will become apparent from reading the following description of an embodiment of the invention provided by way of non-limiting example, with the aid of the figures illustrated in the appended tables of drawings, in which:
- figure 1 represents a schematic view of a hygienic litter toilet with an exploded view of the detached components, according to the invention as a whole;
- figure 2 is a view that highlights the sieving operation of inert granular material through the slits of the upper tray, with the inert granular material that falls into the lower tray;

- figure 3 illustrates a schematic view representing the transfer of the absorbent inert granular material from the closed bottom to the one with the openings on a side wall for being able to start using the product again;

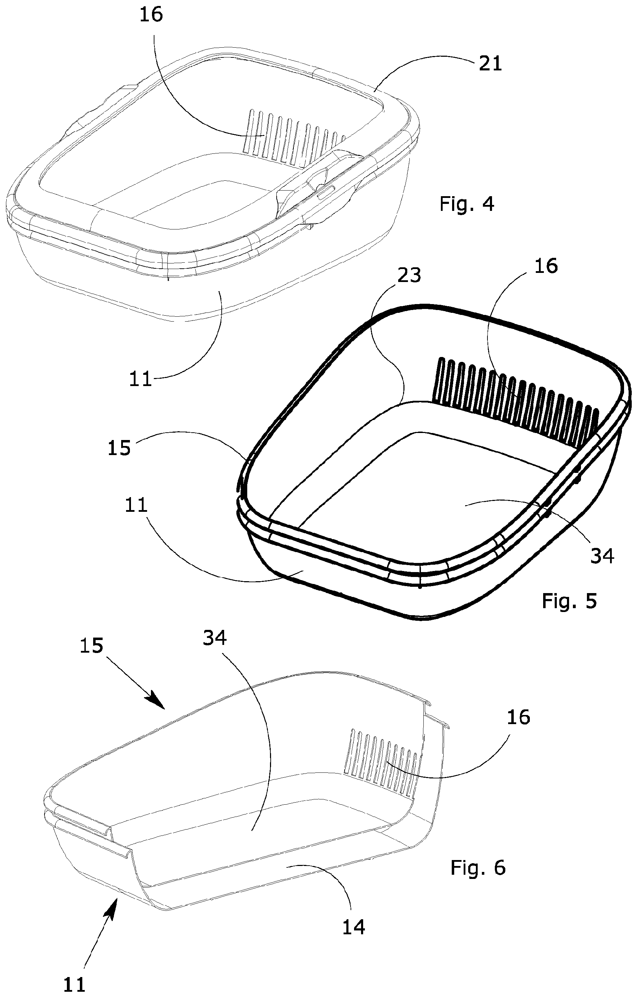

- figure 4 is a view of the toilet as a whole, totally assembled and ready for use;
- figure 5 is a three-dimensional perspective view of the two superposed trays;
- figure 6 shows an image of the two bottoms on top of each other and sectioned.

### DESCRIPTION OF AN EMBODIMENT OF THE INVENTION

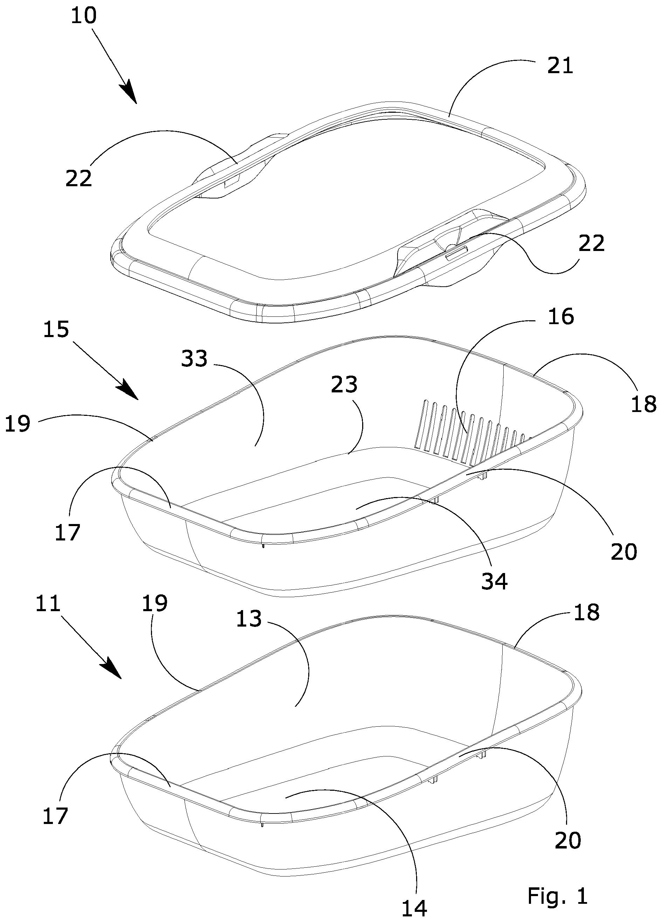

With reference to the figures, and initially in particular to figure 1, reference number 10 generally indicates a hygienic litter toilet for domestic pets, in particular cats, according to the invention.

The hygienic litter toilet 10 comprises two essential components: a first container 11 of the tray type having closed side walls 13 and bottom plane 14, i.e. not provided with any openings, and a second container 15 corresponding to the previous one as it also comprises walls 33 and bottom plane 34, with the difference that in this case it comprises a side wall comprising a plurality of openings comprised of slits and/or slots and/or holes 16 adapted to sieve inert or absorbent granular material comprised in the bottom of said second tray 15.

According to the embodiment shown in figure 1 the openings 16 or other similar openings of various kinds present in the second container 15, are arranged exclusively at one of the side walls 33 of the second container itself that rise from the bottom plane.

According to such embodiment the side walls both of the second container 15 but also of the first 11 are almost identical, and have a different height and in particular two opposite edges 17 and 18 are arranged at different heights, the first lower and the second higher, whereas the remaining two opposite walls have inclined upper edges for constructing a continuous connection of the side walls.

The openings 16 are arranged, according to a preferred embodiment, at the highest bottom wall defined by the edge 18.

The two tray containers 11 and 15 can be inserted into one another perfectly matched as their profiles are identical, and still according to the embodiment represented in figure 1 their edges which in use are superposed, remain comprised by a frame 21, possibly provided with a retaining means 22 which enables the mutual retaining thereof.

From the operating point of view upon the first use, the two tray containers 11 and 15 are comprised in one another, i.e. the first tray 11 houses the second tray 15 within it and, according to an advantageous embodiment, they remain closely connected to one another by means of the frame 21 which mutually clamps them.

At this point an inert granular material can be poured onto the bottom of the upper container which can be arranged up to an indicative level line 23 that remains arranged below the zone in which the openings 16 are made.

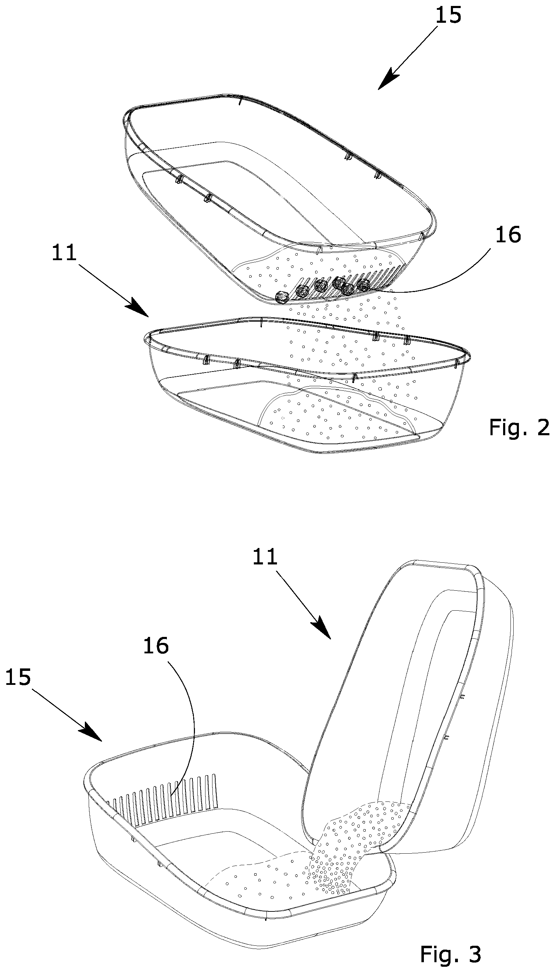

When the toilet has been used by the domestic pet and it is necessary to clean it, it is sufficient to disassemble the frame 21, separate the upper container 15 from the lower one 11 and sieve onto the same lower container the inert granular material by tilting the container itself so as to reach the slots 16, as shown in figure 2. In this way the recoverable inert granular material falls onto the lower bottom whereas the excrements remain inside the upper container, ready to be removed.

At this point the upper container 15 is free and is suitable to receive the inert granular material still in good condition present in the lower container 11, recovered from the previous sieving, so as to be arranged on the bottom possibly with any topping up of new inert granular material.

At this point, the first container 11 is empty and ready to house the second container 15, and once the frame 21 is applied on the edges, the toilet is ready for a new perfectly clean use.

## Claims

1. A hygienic litter toilet (10) for a domestic pet comprising:
a) a first container (11) of the tray type having a bottom plane (14) and a side surface having one or more side walls (13) delimited by one or more upper edges (17, 18, 19, 20);
b) a second container (15) of the tray type corresponding to the previous one, also comprising a bottom plane (34) and side walls (33) delimited by upper edges (17, 18, 19, 20);
the second container (15) being insertable inside the first container (11) and being adapted to receive a layer of absorbent or compacting inert granular material for excrements of the domestic pet,
said second container (15) comprising a plurality of openings (16) arranged exclusively at one of the side walls (33) which rise from the bottom plane (34), said openings (16) having dimensions such as to enable passage of said inert granular material, **characterised in that** the first container (11) comprises a tray without any openings.

2. The toilet (10) according to claim 1, **characterised in that** the side walls both of the second container (15) and of the corresponding first container (11), are defined by edges arranged at almost identical heights.

3. The toilet (10) according to claim 1, **characterised in that** the side walls both of the second container (15) and of the corresponding first container (11), are defined by edges arranged at different heights.

4. The toilet (10) according to claim 3, **characterised in that** the two containers (11, 15) comprise two edges (17, 18) located on the top of two opposite side walls having different heights, while the remaining two opposite side walls have inclined upper edges (19, 20), the arrangement of said edges defining a layout which lies on an inclined plane with respect to the bottom plane (14).

5. The toilet (10) according to any one of claims 3 and 4, **characterised in that** said openings (16) are arranged at the side wall defined by the highest edge (18).

6. The toilet (10) according to any one of the preceding claims, **characterised in that** it further comprises a frame (21) that contains and clamps between them the respective edges (17, 18, 19, 20) of the first and second containers (11, 15).

7. The toilet (10) according to claim 6, **characterised in that** the frame (21) is provided with a retaining means (22) which enables a reciprocal holding of the containers on which it is applied.

8. The toilet (10) according to claim 6, **characterised in that** the frame (21) hooks onto the edges of the second container (15) provided with openings (16), so as to function as an element limiting any leakage of inert granular material due to the movements of the domestic pet.

9. The toilet (10) according to any one of the preceding claims, **characterised in that** the openings (16) are comprised of slots and/or slits and/or holes.

10. A method for using a hygienic litter toilet (10) for domestic pets according to any one of the preceding claims, **characterised in that** the second container (15) is separated from the first container (11) and subsequently the inert granular material is sieved and made to fall onto the first container (11) by tilting the second container (15) onto the first container (11) so that the recoverable inert granular material falls onto the bottom of the first container (11), cleaning the second container (15) from residues present in the second container itself, then pouring the inert granular material from the first container (11) onto the bottom of the second container (15), and finally arranging the second container (15) in the first container (11) making them match each other.

11. The method according to claim 10, wherein the first and the second containers (11, 15) are provided with respective edges (17, 18, 19, 20) matching one another, and wherein the edges are retained against each other by means of a frame (21) provided with a retaining means of the edges themselves, **characterised in that** the frame (21) is unhooked from said edges before separating the two containers (11, 15) from one another for proceeding with the sieving of the inert granular material, and then hooked back to the edges for retaining them once the two containers (11, 15) have been cleaned.

## Patentansprüche

1. Eine hygienische Streutoilette für ein Haustier,
bestehend aus:
a) einem ersten Behälter (11) vom Tablett-Typ mit einer Bodenfläche (14) und einer Seitenfläche mit einer oder mehreren Seitenwänden (13), die durch eine oder mehrere Oberkanten (17, 18, 19, 20) begrenzt sind;
b) einen zweiten Behälter (15) vom Tablett-Typ, der dem vorherigen entspricht und ebenfalls eine Bodenfläche (34) und Seitenwände (33) aufweist, die durch Oberkanten (17, 18, 19, 20) begrenzt sind;
wobei der zweite Behälter (15) in den ersten Behälter (11) eingesetzt werden kann und dazu ausgelegt ist, eine Schicht aus absorbierendem oder verdichtendem inertem Granulatmaterial für die Exkremente des Haustiers aufzunehmen,
wobei der zweite Behälter (15) mehrere Öffnungen (16) aufweist, die ausschließlich an einer der Seitenwände (33) angeordnet sind, die sich von der Bodenfläche (34) erhebt, wobei die Öffnungen (16) Abmessungen aufweisen, die den Durchgang des inerten körnigen Materials ermöglichen, **dadurch gekennzeichnet, dass** der erste Behälter eine Schale ohne Öffnungen umfasst.

2. Die Toilette (10) gemäß Anspruch 1, **dadurch gekennzeichnet, dass** die Seitenwände sowohl des zweiten Behälters (15), als auch des entsprechenden ersten Behälters (11) durch Kanten definiert sind, die auf nahezu identischen Höhen angeordnet sind.

3. Die Toilette (10) gemäß Anspruch 1, **dadurch gekennzeichnet, dass** die Seitenwände sowohl des zweiten Behälters (15), als auch des entsprechenden ersten Behälters (11) durch Kanten definiert sind, die in unterschiedlichen Höhen angeordnet sind.

4. Toilette (10) nach Anspruch 3, **dadurch gekennzeichnet, dass** die beiden Behälter (11, 15) zwei Kanten (17, 18) aufweisen, die sich an der Oberseite von zwei gegenüberliegenden Seitenwänden mit unterschiedlichen Höhen befinden, während die beiden übrigen gegenüberliegenden Seitenwände geneigte Oberkanten (19, 20) aufweisen, wobei die Anordnung dieser Kanten ein Layout definiert, das in Bezug auf die Bodenebene (14) liegt.

5. Die Toilette (10) gemäß einem der Ansprüche 3 und 4, **dadurch gekennzeichnet, dass** die Öffnungen (16) an der Seitenwand angeordnet sind, die durch die höchste Kante (18) definiert ist.

6. Die Toilette (10) gemäß einem der vorstehenden Ansprüche, **dadurch gekennzeichnet, dass** sie ferner einen Rahmen (21) umfasst, der die jeweiligen Kanten (17, 18, 19, 20) des ersten und zweiten Behälters (11, 15) enthält und zwischen sich einklemmt.

7. Die Toilette (10) gemäß Anspruch 6, **dadurch gekennzeichnet, dass** der Rahmen (21) mit einer Haltevorrichtung (22) versehen ist, die ein gegenseitiges Halten der Behälter ermöglicht, auf denen sie angebracht ist.

8. Die Toilette (10) gemäß Anspruch 6, **dadurch gekennzeichnet, dass** der Rahmen (21) an den mit Öffnungen (16) versehenen Rändern des zweiten Behälters (15) einhängt, um als Element zu fungieren, das ein Austreten von inertem Granulat aufgrund der Bewegungen des Haustiers begrenzt.

9. Die Toilette (10) gemäß einem der vorstehenden Ansprüche, **dadurch gekennzeichnet, dass** die Öffnungen (16) aus Schlitzen und/oder Spalten und/oder Löchern bestehen.

10. Verfahren zur Verwendung einer hygienischen Streutoilette (10) für Haustiere gemäß einem der vorstehenden Ansprüche, **dadurch gekennzeichnet, dass** der zweite Behälter (15) vom ersten Behälter (11) getrennt wird und anschließend das inerte Granulat gesiebt und auf den ersten Behälter (11) fallen gelassen wird, indem der zweite Behälter (15) auf den ersten Behälter (11) gekippt wird, so dass das wiederverwertbare inerte Granulat auf den Boden des ersten Behälters (11) fällt, wodurch der zweite Behälter (15) von Rückständen gereinigt wird, die sich im zweiten Behälter selbst befinden, dann das inerte Granulat aus dem ersten Behälter (11) auf den Boden des zweiten Behälters (15) gegossen wird und schließlich der zweite Behälter (15) in den ersten Behälter ( 11) eingesetzt wird, sodass sie miteinander korrespondieren.

11. Verfahren nach Anspruch 10, wobei der erste und der zweite Behälter (11, 15) mit jeweils zueinander passenden Kanten (17, 18, 19, 20) versehen sind und wobei die Kanten mittels eines Rahmens (21) mit einer Haltevorrichtung für die Kanten selbst aneinander gehalten werden, **dadurch gekennzeichnet, dass** der Rahmen (21) vor dem Trennen der beiden Behälter (11, 15) voneinander zum Fortfahren mit dem Sieben des inerten Granulats von den Kanten abgehakt und dann wieder an den Kanten eingehakt wird, um diese nach der Reinigung der beiden Behälter (11, 15) zu halten.

## Revendications

1. Toilettes pour litière hygiénique (10) pour un animal domestique, comprenant :
a ) un premier récipient (11) de type bac, comportant un fond plat (14) et une surface latérale avec une ou plusieurs parois latérales (13) délimitées par un ou plusieurs bords supérieurs (17, 18, 19, 20) ;
b) un deuxième récipient (15) de type bac correspondant au précédent, comprenant également un fond plat (34) et des parois latérales (33) délimitées par des bords supérieurs (17, 18, 19, 20) ;
le deuxième récipient (15) pouvant être inséré à l'intérieur du premier récipient (11) et étant adapté pour recevoir une couche de matériau granulaire inerte absorbant ou compactant pour les excréments de l'animal domestique,
ledit deuxième récipient (15) comprenant une pluralité d'ouvertures (16) disposées exclusivement sur l'une des parois latérales (33) qui s'élèvent à partir du plan de fond (34), lesdites ouvertures (16) ayant des dimensions telles qu'elles permettent le passage dudit matériau granulaire inerte, **caractérisé en ce que** le premier récipient (11) comprend un plateau sans aucune ouverture.

2. Toilettes (10) selon la revendication 1, **caractérisées en ce que** les parois latérales du deuxième récipient (15) et du premier récipient correspondant (11) sont définies par des bords disposés à des hauteurs presque identiques.

3. Toilettes (10) selon la revendication 1, **caractérisées en ce que** les parois latérales du deuxième récipient (15) et du premier récipient correspondant (11) sont définies par des bords disposés à différentes hauteurs.

4. Toilettes (10) selon la revendication 3, **caractérisées en ce que** les deux récipients (11, 15) comprennent deux bords (17, 18) situés sur le dessus de deux parois latérales opposées ayant des hauteurs différentes, tandis que les deux autres parois latérales opposées ont des bords supérieurs inclinés (19, 20), la disposition desdits bords définissant une configuration qui se trouve sur un plan incliné par rapport au plan inférieur (14).

5. Toilettes (10) selon l'une quelconque des revendications 3 et 4, **caractérisées en ce que** lesdites ouvertures (16) sont disposées sur la paroi latérale définie par le bord le plus haut (18).

6. Toilettes (10) selon l'une quelconque des revendications précédentes, **caractérisées en ce qu'**elles comprennent en outre un cadre (21) qui contient et serre entre eux les bords respectifs (17, 18, 19, 20) des premier et deuxième récipients (11, 15).

7. Toilettes (10) selon la revendication 6, **caractérisées en ce que** le cadre (21) est muni d'un moyen de retenue (22) qui permet un maintien réciproque des récipients sur lesquels il est appliqué.

8. Toilettes (10) selon la revendication 6, **caractérisées en ce que** le cadre (21) s'accroche aux bords du deuxième récipient (15) muni d'ouvertures (16), de manière à fonctionner comme un élément limitant toute fuite de matière granulaire inerte due aux mouvements de l'animal domestique.

9. Toilettes (10) selon l'une quelconque des revendications précédentes, **caractérisées en ce que** les ouvertures (16) sont constituées de rainures et/ou de fentes et/ou de trous.

10. Procédé d'utilisation de toilettes de litière hygiénique (10) pour animaux domestiques selon l'une quelconque des revendications précédentes, **caractérisé en ce que** le deuxième récipient (15) est séparé du premier récipient (11) et ensuite, le matériau granulaire inerte est tamisé et tombe sur le premier récipient (11) en inclinant le deuxième récipient (15) sur le premier récipient (11) de manière à ce que le matériau granulaire inerte récupérable tombe sur le fond du premier récipient (11), en nettoyant le deuxième récipient (15) des résidus présents dans le deuxième récipient lui-même, puis en versant le matériau granulaire inerte du premier récipient (11) au fond du deuxième récipient (15), et enfin en plaçant le deuxième récipient (15) dans le premier récipient (11) de manière à ce qu'ils s'emboîtent l'un dans l'autre.

11. Procédé selon la revendication 10, dans lequel les premier et deuxième conteneurs (11, 15) sont pourvus de bords respectifs (17, 18, 19, 20) qui s'adaptent les uns aux autres, et dans lequel les bords sont maintenus les uns contre les autres au moyen d'un cadre (21) pourvu d'un moyen de retenue des bords eux-mêmes, **caractérisée en ce que** le cadre (21) est décroché desdits bords avant de séparer les deux conteneurs (11, 15) l'un de l'autre pour procéder au tamisage du matériau granulaire inerte, puis raccroché aux bords pour les retenir une fois que les deux conteneurs (11, 15) ont été nettoyés.
